# EUROPÄISCHE PATENTSCHRIFT

(11) **EP 0 336 292 B1**
(45) Veröffentlichungstag und Bekanntmachung des Hinweises auf die Patenterteilung: **09.02.1994**
(21) Anmeldenummer: 89105603.8
(22) Anmeldetag: 30.03.1989
(51) Int. Cl.: H02G 5/04, H01R 25/14

(54) **Bausatz für ein Sammelschienensystem**
Kit for a bus bar system
Assemblage pour un système de barre conductrice

(30) Priorität: 06.04.1988 DE 3811459
(43) Veröffentlichungstag der Anmeldung: 11.10.1989
(73) Patentinhaber: Rittal-Werk Rudolf Loh GmbH & Co. KG, 35745 Herborn (DE)
(72) Erfinder: Wagener, Hans, D-6344 Dietzhölztal-Rittershausen (DE)
(74) Vertreter: Vogel, Georg

(56) Entgegenhaltungen:
- DE-A- 1 540 502
- DE-U- 7 703 787
- NL-A- 6 701 413

## Beschreibung

Die Erfindung betrifft einen Bausatz für ein Sammelschienensystem aus Haltern und Strom-Sammelschienen-Abschnitten, die in im Abstand und parallel zueinander verlaufende Aufnahmen der Halter festlegbar oder festgelegt sind, bestehend aus
a) ersten Haltern, die als rechteckförmige Trägerplatten ausgebildet sind, deren Längsabmessungen in Längsrichtung der Strom-Sammelschienen-Abschnitte ausgerichtet sind,
b) zweiten Haltern, die als zusammengesetzte oder einstückige rechtwinklige Trägerplatten ausgebildet sind, bei denen zusammengesetzte oder einstückige rechtwinklige Strom-Sammelschienen-Abschnitte in den Aufnahmen dieser Trägerplatten festgelegt sind, und
c) Verbinderelementen, die im Bereich der Stoßstellen der Trägerplatten aufeinanderstoßender erster und/oder zweiter Halter die Strom-Sammelschienen-Abschnitte elektrisch leitend miteinander verbinden.

Ein Bausatz dieser Art ist durch DE-U 77 03 787 bekannt. Mit den unterschiedlich gestalteten Haltern lassen sich Sammelschienensysteme in zwei Koordinatenrichtungen verlegen, wobei die zweiten Halter den Übergang von der einen in die andere Koordinatenrichtung zulassen. Bei diesem bekannten Sammelschienensystem stehen die Strom-Sammelschienen-Abschnitte an den Schmalseiten der Trägerplatten als Steckelemente vor und werden über zwischen aufeinanderstoßenden Haltern mittels buchsenartigen Steckverbindern miteinander verbunden. Die Steckverbinder sind dabei auf getrennten Trägerplatten befestigt. Im Bereich der Stoßstellen der Halter ist ein Anschluß eines elektrischen Gerätes nicht möglich. Auch die elektrischen Geräte werden mittels Steckverbindungen mit den Strom-Sammelschienen-Abschnitten verbunden, so daß die Trägerplatten eine beachtliche Höhe aufweisen müssen.

Aus der DE-A 15 40 502 ist ein Halter für Sammelschienensysteme bekannt, mit dem ein rechtwinkliger Übergang von Strom-Sammelschienen-Abschnitten möglich ist. Die Trägerplatte ist kreisbogenförmig ausgebildet und endet in geradlinigen Verlängerungen. Die Enden der in der Trägerplatte festgelegten Strom-Sammelschienen-Abschnitte werden z.B. durch mit Schrauben versehene Klemmvorrichtungen mit den Strom-Sammelschienen-Abschnitten der benachbarten Halter verbunden. Im Bereich der Stoßstellen aufeinanderstoßender Strom-Sammelschienen-Abschnitte und im Bereich des Überganges von einer Koordinate in die jeweils andere Koordinate können keine elektrischen Geräte angeschlossen werden.

Es ist Aufgabe der Erfindung, einen Bausatz für ein Sammelschienensystem der eingangs erwähnten Art zu schaffen, dessen Teile in zwei senkrecht zueinander stehenden Richtungen beliebig aneinanderreihbar sind und dabei über der gesamten Länge der zusammengesetzten Strom-Sammelschienen-Abschnitte den Anschluß elektrischer Geräte zuläßt.

Diese Aufgabe wird nach der Erfindung dadurch gelöst, daß die Strom-Sammelschienen-Abschnitte mit den Schmalseiten ihrer zugeordneten Trägerplatte bündig abschließen, daß die Strom-Sammelschienen-Abschnitte im Querschnitt Z-förmige ausgebildet sind, daß ein Querschenkel jeweils als Befestigungsschenkel in die Aufnahme eingeführt und mit der Trägerplatte verbunden, vorzugsweise verschraubt ist, daß jeweils ein Abstandsschenkel den jeweils anderen Querschenkel als Klemmschenkel im Abstand und parallel zu der Oberseite der Trägerplatte hält, daß die als Klemmschenkel dienenden Querschenkel der Z-förmigen Strom-Sammelschienen-Abschnitte auf den Trägerplatten jeweils zur gleichen Längsseite oder den Außenseiten der Trägerplatten ausgerichtet sind, daß in den Nutgrund der nutförmigen Aufnahmen der Trägerplatten in den Endabschnitten der Schmalseiten oder der Stirnseiten Erweiterungen zur Aufnahme der Hälfte von plattenförmigen Verbinderelementen eingebracht sind, und daß die Strom-Sammelschienen-Abschnitte im Bereich dieser Erweiterungen mit Befestigungsaufnahmen für Befestigungsschrauben versehen sind, die in Gewindeaufnahmen der in die Erweiterungen eingeschobenen Verbinderelemente einschraubbar sind.

Der rechtwinklige Übergang in den zweiten Haltern ergibt in Verbindung mit dem bündigen Abschluß der Strom-Sammelschienenabschnitte an den Schmalseiten der Halter und der Verwendung Z-förmiger Strom-Sammelschienen-Abschnitte einen durchgehenden Klemmschenkel zum Anbringen elektrischer Geräte, wobei die Anordnung der Verbinderelemente im Bereich der Befestigungsschenkel der Strom-Sammelschienen-Abschnitte nicht stört.

Der Aufbau der rechtwinkligen, zweiten Halter ist nach einer Ausgestaltung so, daß die rechtwinkligen Trägerplatten der zweiten Halter aus jeweils zwei Teil-Trägerplatten zusammengesetzt sind, die im Bereich ihrer Stoßstellen im ergänzenden Winkel von jeweils 45° zu den auf ihrer Oberseite festgelegten Strom-Sammelschienen-Abschnitte stehen. Dabei kann vorgesehen sein, daß in die zusammengesetzten rechtwinkligen Aufnahmen der zusammengesetzten Trägerplatten der zweiten Halter rechtwinklige einstückige Strom-Sammelschienen-Abschnitte eingesetzt sind, oder daß in die zusammengesetzten rechtwinkligen Aufnahmen der zusammengesetzten rechtwinkligen Trägerplatten der zweiten Halter einzelne Strom-Sammelschienen-Abschnitte eingesetzt sind, die im Bereich der aufeinanderstoßenden abgeschrägten Seiten der Teil-Trägerplatten mittels rechtwinkliger Verbinderelemente elektrisch leitend miteinander verbunden sind.

Die rechtwinkligen zweiten Halter können nach einer weiteren Ausgestaltung auch eine einstückige Trägerplatte aufweisen, wobei in die rechtwinkligen Aufnahmen einzelne Strom-Sammelschienen-Abschnitte eingesetzt sind, die im Bereich der aufeinanderstoßenden abgeschrägten Aufnahmen mittels rechtwinkliger Verbinderelemente elektrisch leitend miteinander verbunden sind.

Der Anschluß der Versorgungsleitungen an das zusammengesetzte Sammelschienensystem wird dadurch ermöglicht, daß als weiteres Bauteil eine Anschlußplatte vorgesehen ist, die mit rechtwinkligen Verbindungsschienen versehen ist, daß die rechtwinkligen Verbindungsschienen bündig mit zwei im rechten Winkel zueinander stehenden Anschlußseiten der Anschlußplatte abschließen und daß die Verbindungsschienen zumindest auf einer Anschlußseite der Anschlußplatte mittels Verbinderelementen mit den Strom-Sammelschienen-Abschnitten eines ersten oder zweiten Halters verbindbar sind.

Die elektrische Durchschaltung der aufeinanderstoßenden Strom-Sammelschienen-Abschnitte im Bereich der Stoßstellen der Trägerplatten wird nach einer Ausgestaltung so vorgenommen, daß in den Nutgrund der nutförmigen Aufnahmen der Trägerplatten in den Endabschnitten der Schmalseiten oder der Stirnseiten Erweiterungen zur Aufnahme der Hälfte von plattenförmigen Verbinderelementen eingebracht sind und daß die Strom-Sammelschienen-Abschnitte im Bereich dieser Erweiterungen mit Befestigungsaufnahmen für Befestigungsschrauben versehen sind, die in Gewindeaufnahmen der in die Erweiterungen eingeschobenen Verbinderelemente einschraubbar sind. Dabei ist die Auslegung so abgestimmt, daß die Erweiterungen im Nutgrund der nutförmigen Aufnahmen eingebracht und in der Breite, der Tiefe und der Höhe auf die Breite, die halbe Länge und die Dicke der plattenförmigen Verbinderelementen abgestimmt sind. Eine ausreichend große Kontaktfläche und damit kleiner Kontaktübergangswiderstand wird dabei dadurch erreicht, daß die Breite der Verbinderelemente der Breite der Erweiterungen und der Breite der Befestigungsschenkel der Strom-Sammelschienen-Abschnitte entspricht.

Die Durchschaltung kann jedoch auch Verbinderelemente aufweisen, die dadurch gekennzeichnet sind, daß die Verbinderelemente aus einer Isolierplatte und einer Kontaktplatte zusammengesetzt sind, wobei die Befestigungsschrauben jeweils durch Bohrungen der Kontaktplatte hindurch in die Gewindeaufnahme der Isolierplatte eingeschraubt sind.

Eine geschützte Zuführung der Anschluß- und Verbindungsleitungen zu den auf den Strom-Sammelschienen-Abschnitten befestigten elektrischen Geräten wird nach einer Ausgestaltung dadurch erhalten, daß zumindest zwischen den benachbarten Strom-Sammelschienen-Abschnitten Reihen von Durchbrüchen in die Trägerplatte eingebracht sind, die in Längsrichtung derselben in gleichmäßigen Abständen angeordnet und quer dazu aufeinander ausgerichtet sind, und daß in die Unterseite der Trägerplatte quer zu den Strom-Sammelschienen-Abschnitten verlaufende Aussparungen eingebracht sind, die als Kabelkanäle die Durchbrüche miteinander und mit den Längsseiten oder den Außen- und Innenseiten der Trägerplatten verbinden.

Der Anschluß der Anschlußplatte an das Sammelschienensystem wird dadurch erleichtert, daß die Verbindungsschienen aus Flachmaterial bestehen und in entsprechende nutförmige Aufnahmen der Anschlußplatte eingesetzt sind und daß im Bereich der Enden der winkelförmigen Verbindungsschienen an den Anschlußseiten der Anschlußplatte Erweiterungen der Aufnahmen zum Einbringen von Verbinderelementen vorgesehen sind.

Die Erfindung wird anhand von in den Zeichnungen dargestellten Ausführungsbeispielen näher erläutert. Es zeigt:
Fig. 1 in Draufsicht einen ersten geraden Halter mit eingesetzten Strom-Sammelschienen-Abschnitten,
Fig. 2 einen Querschnitt durch den ersten Halter entlang der Linie II-II der Fig. 1,
Fig. 3 in Draufsicht ein erstes Ausführungsbeispiel für einen zweiten rechtwinkligen Halter,
Fig. 4 in Draufsicht ein zweites Ausführungsbeispiel für einen zweiten rechtwinkligen Halter,
Fig. 5 in Draufsicht schematisch die Zusammensetzung eines Sammelschienensystems mit ersten und zweiten Haltern sowie einer Anschlußplatte,
Fig. 6 im Querschnitt eine elektrische Durchschaltung mittels eines einstückigen Verbinderelementes und
Fig. 7 in Draufsicht den Teilbereich VII nach Fig. 5, der die Durchschaltung mittels eines zweiteiligen Verbinderelementes erkennen läßt.

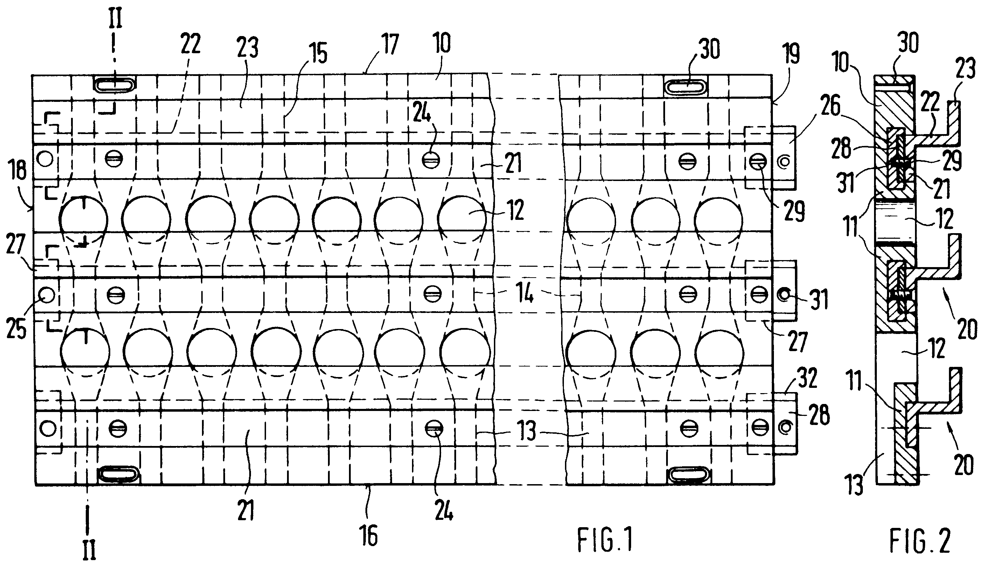

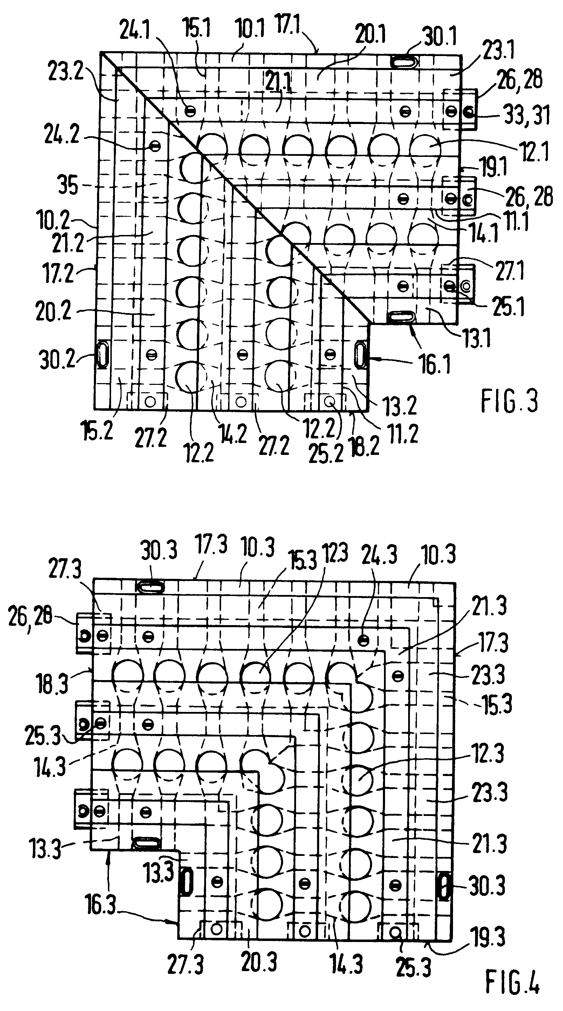

In den Fig. 1 und 2 ist ein Ausführungsbeispiel für einen ersten geraden Halter gezeigt, der aus der rechteckförmigen Trägerplatte 10 aus Isoliermaterial und den in die Aufnahmen 11 der Oberseite der Trägerplatte 10 eingesetzten Strom-Sammelschienen-Abschnitten 20 besteht. Die Aufnahmen 11 sind quer zu den Strom-Sammelschienen-Abschnitten 20 in gleichmäßigen Abständen angeordnet. Die Strom-Sammelschienen-Abschnitte 20 sind im Querschnitt Z-förmig, wobei der eine Querschenkel als Befestigungsschenkel 21 bündig in die Aufnahme 11 eingesetzt und mittels der Schrauben 24 darin festgelegt ist. Die Schrauben 24 sind in Längsrichtung der Strom-Sammelschienen-Abschnitte 20 ebenfalls in gleichmäßigen Abständen angeordnet und quer dazu aufeinander ausgerichtet. Die Mittelschenkel der Strom-Sammelschienen-Abschnitte 20 dienen als Abstandsschenkel 22, die die anderen Querschenkel der Strom-Sammelschienen-Abschnitte 20 als Klemmschenkel 23 zum Festlegen der elektrischen Geräte in vorgegebenem Abstand und parallel zur Oberseite der Trägerplatte 10 halten. Die Strom-Sammelschienen-Abschnitte 20 erstrecken sich über die gesamte Länge der Trägerplatte 10, verlaufen parallel zu deren Längsseiten 16 und 17 und schließen bündig mit den Schmalseiten 18 und 19 der Trägerplatte 10 ab, die senkrecht zu den Strom-Sammelschienen-Abschnitten 20 verlaufen. Die Trägerplatte 10 isoliert und deckt die Strom-Sammelschienen-Abschnitte 20 vollständig zur Befestigungsfläche hin ab. In die Unterseite der Trägerplatte 10 sind quer verlaufende Aussparungen 13, 14 und 15 eingebracht, die sich über einen Teil der Dicke der Trägerplatte 10 erstrecken. Zwischen benachbarten Strom-Sammelschienen-Abschnitte 20 sind Reihen von als Bohrungen ausgebildete Durchbrüche 12 in die Trägerplatte 10 eingebracht. Die Durchbrüche 12 sind in Längsrichtung der Strom-Sammelschienen-Abschnitte 20 in gleichmäßigen Abständen angeordnet und in den Reihen sind die Durchbrüche 12 quer zu den Strom-Sammelschienen-Abschnitten 20 aufeinander ausgerichtet. Die Aussparungen 13 verbinden die Längsseite 16 mit der zugekehrten Reihe von Durchbrüchen 12, während die Aussparungen 15 die Längsseite 17 mit der zugekehrten Reihe von Durchbrüchen 12 verbinden. Die Aussparungen 14 verbinden die Durchbrüche 12 der beiden Reihen. Auf diese Weise dienen die Aussparungen 13, 14 und 15 als Kabelkanäle, in denen Anschluß- und Verbindungsleitungen in der vorgegebenen Teilung der Durchbrüche 12 in den Reihen geschützt durch die Trägerplatte 10 zu den auf den Klemmschenkeln 23 der Strom-Sammelschienen-Abschnitte 20 festgelegten elektrischen Geräten geführt werden können. Die Trägerplatte 10 trägt im Randbereich der Längsseiten 16 und 17 Befestigungsaufnahmen 30 für Befestigungsschrauben.

Der erste Halter mit der Trägerplatte 10 und den in die Aufnahmen 11 eingesetzten Strom-Sammelschienen-Abschnitten 20 bildet eine vorgefertigte Einheit. Mehrere derartige erste Halter können zu einem Sammelschienensystem aneinandergereiht werden. Dabei müssen die aufeinanderstoßenden Enden der Strom-Sammelschienen-Abschnitte 20 elektrisch leitend miteinander verbunden werden. Dabei werden in den ersten Haltern Strom-Sammelschienen-Abschnitte 20 gleichen Querschnitts verwendet. Sind die Klemmschenkel 23 aller Strom-Sammelschienen-Abschnitte 20 zur Längsseite 17 der Trägerplatte 10 gerichtet, dann haben die Klemmschenkel 23 denselben mittleren Abstand wie die Aufnahmen 11 in der Trägerplatte 10, der auf die Kontaktbügel oder Federkontakte der aufgesetzten elektrischen Geräte abgestimmt ist.

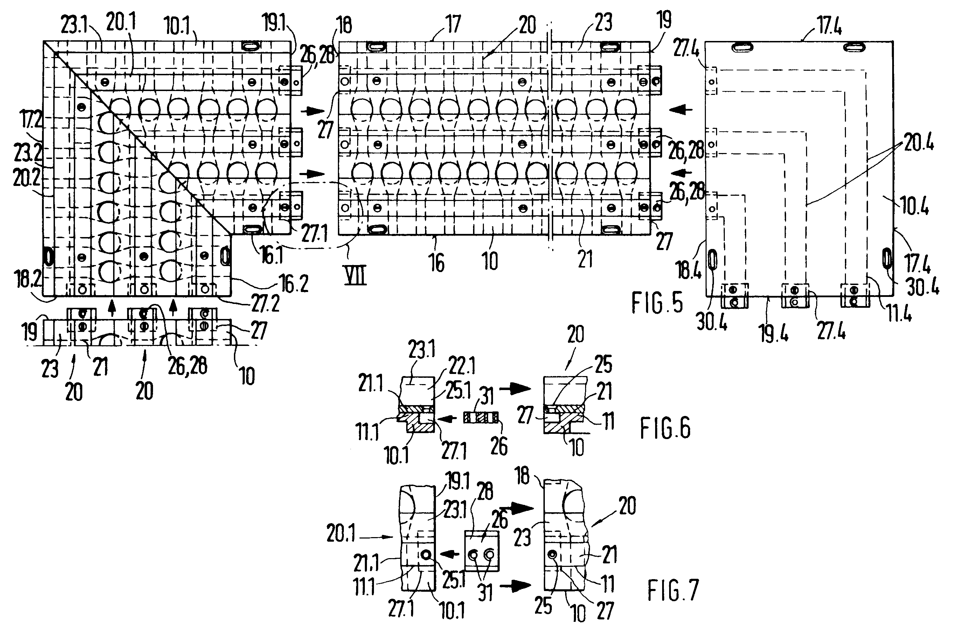

In den den Schmalseiten 18 und 19 der Trägerplatte 10 zugekehrten Endabschnitten sind in den Nutgrund der nutförmigen Aufnahmen 11 Erweiterungen 27 eingebracht, die ein einstückiges plattenförmiges Verbinderelement 26 oder ein zweiteiliges, aus Isolierplatte 26 und Kontaktplatte 28 bestehendes Verbinderelement zur Hälfte aufnehmen. Die Breite, die Tiefe und die Höhe dieser Erweiterungen 27 entsprechen beim einstückigen, elektrisch leitenden Verbinderelement 26 der Breite, der halben Länge und der Dicke des Verbinderelementes 26, wie Fig. 7 zeigt. Über den Erweiterungen 27 tragen die Strom-Sammelschienen-Abschnitte 20 Befestigungsaufnahmen 25 für Befestigungsschrauben 29, die in Gewindeaufnahmen 31 der Verbinderelemente 26 eingeschraubt werden. Auf diese Weise können die Trägerplatten 10 von aneinandergereihten ersten Haltern ohne Trennfuge aneinander anschließen und die Verbinderelemente 26 schalten unterhalb der Befestigungsschenkel 21 die Strom-Sammelschienen-Abschnitte 20 elektrisch leitend durch. Dabei wird die volle Breite der Befestigungsschenkel 21 als Kontaktfläche ausgenützt, wenn sich die Erweiterungen 27 und die Verbinderelemente 26 über die gesamte Breite der Befestigungsschenkel 21 der Strom-Sammelschienen-Abschnitte 20 erstrecken.

Wie die Draufsicht nach Fig. 1 und 6 zeigt, kann die Durchschaltung auch mittels zweiteiliger Verbinderelemente vorgenommen werden. Die elektrisch leitenden Kontaktplatten 28 erstrecken sich über die gesamte Breite der Befestigungsschenkel 21 der Strom-Sammelschienen-Abschnitte 20, während die im Querschnitt U-förmigen Isolierplatten 26 mit ihren Seitenschenkeln 32 die Längsseiten der Kontaktplatten 28 isolierend überdecken. Die Erweiterungen 27 haben daher eine Breite, die größer ist als die Breite der Befestigungsschenkel 21 der Strom-Sammelschienen-Abschnitte 20 und der Breite der Isolierplatten 26 entspricht. Die Kontaktplatten 28 haben über den Gewindeaufnahmen 31 der Isolierplatten 26 Durchgangsbohrungen 33 für die Befestigungsschrauben 29, die wieder in die Befestigungsaufnahmen 25 der Strom-Sammelschienen-Abschnitte 20 eingeführt werden.

In Fig. 3 ist ein rechtwinkliger zweiter Halter gezeigt, der an einen ersten Halter angeschlossen, das Sammelschienensystem in einer senkrecht zu den Strom-Sammelschienen-Abschnitten 20 des ersten Halters senkrechten Richtung nach unten oder nach oben weiterführen kann. Dies hängt lediglich davon ab, welche Stirnseite 18.2 oder 19.2 der rechtwinkligen Trägerplatte als Anschlußseite verwendet wird und an welche Schmalseite 18 oder 19 der Trägerplatte 10 des ersten Halters die Anreihung erfolgt.

Bei dem Ausführungsbeispiel nach Fig. 3 sind als Trägerplatte zwei Teil-Trägerplatten 10.1 und 10.2 verwendet, die im Winkel von 45° aufeinanderstoßen und sich zu einem rechten Winkel ergänzen. Dabei können in die Aufnahmen 11.1 und 11.2 der Teil-Trägerplatten 10.1 und 10.2 einzelne Strom-Sammelschienen-Abschnitte 20.1 und 20.2 eingesetzt werden, die in der Trennfuge der Teil-Trägerplatten 10.1 und 10.2 im Winkel von 45° abgeschrägt aufeinanderstoßen und in diesem Eckbereich mittels elektrisch leitender rechtwinkliger Verbinderelemente 35 miteinander verbunden sind. Die Verbinderelemente 35 sind dabei vorzugsweise in den Nutgrund der nutförmigen, aufeinanderstoßenden Aufnahmen 11.1 und 11.2 eingelassen. Die Strom-Sammelschienen-Abschnitte 20.1 und 20.2 tragen wieder Befestigungsschenkel 21.1 und 21.2, Abstandsschenkel 22.1 und 22.2 sowie Klemmschenkel 23.1 und 23.2, die zu den Außenseiten 17.1 und 17.2 der aus den Teil-Trägerplatten 10.1 und 10.2 zusammengesetzten rechtwinkligen Trägerplatte des zweiten Halters gerichtet sind. Die Innenseiten 16.1 und 16.2 stehen über die Aussparungen 13.1 und 13.2 mit den zugekehrten Durchbrüchen 12.1 und 12.2 in Verbindung, während die Aussparungen 15.1 und 15.2 die jeweils andere Reihe von Durchbrüchen 12.1 und 12.2 mit den Außenseiten 17.1 und 17.2 verbinden. Die Aussparungen 14.1 und 14.2 verbinden die Reihen von Durchbrüchen 12.1 und 12.2 untereinander. In den Stirnseiten 18.2 und 19.1 der Teil-Trägerplatten 10.1 und 10.2 sind die Aufnahmen 11.1 und 11.2 mit Erweiterungen 27.1 und 27.2 versehen, die wieder einstückige oder zweiteilige Verbinderelemente 26, 28 zur Hälfte aufnehmen können. Die Befestigungsaufnahmen 25.1 und 25.2 in den Strom-Sammelschienen-Abschnitten 20.1 und 20.2 dienen wieder zur Aufnahme von Befestigungsschrauben 29 und die Teil-Trägerplatten 10.1 und 10.2 können über die Befestigungsaufnahmen 30.1 und 30.2 mit der Befestigungsfläche verbunden werden. Die Strom-Sammelschienen-Abschnitte 20.1 und 20.2 werden mittels der Schrauben 24.1 und 24.2 mit den Teil-Trägerplatten 10.1 und 10.2 verbunden.

Die aus den Teil-Trägerplatten 10.1 und 10.2 zusammengesetzte rechtwinklige Trägerplatte des zweiten Halters kann auch einstückige rechtwinklige Strom-Sammelschienen-Abschnitte aufnehmen, wobei die einzelnen Strom-Sammelschienen-Abschnitte 20.1 und 20.2 zusammengefaßt sind. Ebenso können die Teil-Trägerplatten 10.1 und 10.2 als einstückige rechtwinklige Trägerplatte 10.3 hergestellt werden, wie das Ausführungsbeispiel nach Fig. 4 zeigt. Die Stirnseiten 18.3 und 19.3 der rechtwinkligen Trägerplatte 10.3 dienen als Anschlußseiten, wobei die Aufnahmen 11.3 mit den in den Nutgrund eingebrachten Erweiterungen 27.3 zur Aufnahme eines einstückigen Verbinderelementes 26 oder eines zweiteiligen Verbinderelementes aus Isolierplatte 26 und Kontaktplatte 28 versehen sind. Die Strom-Sammelschienen-Abschnitte 20.3 sind rechtwinklig und schließen mit den Stirnseiten 18.3 und 19.3 der Trägerplatte 10.3 bündig ab. Die Strom-Sammelschienen-Abschnitte 20.3 sind mit ihren Befestigungsschenkeln 21.3 bündig in die Aufnahmen 11.3 eingesetzt und mit den Schrauben 24.3 mit der Trägerplatte 10.3 verbunden. Die Aussparungen 13.3, 14.3 und 15.3 in der Unterseite der Trägerplatte 10.3 dienen als Kabelkanäle, die jeweils quer zu den Strom-Sammelschienen-Abschnitte 20.3 verlaufen. Die Klemmschenkel 23.3 stehen über die Abstandsschenkel 22.3 im Abstand zu der Oberseite der Trägerplatte 10.3 und sind alle zu den Außenseiten 17.3 der Trägerplatte 10.3 gerichtet, so daß an beiden Stirnseiten 18.3 und 18.4 weitere erste oder zweite Halter angereiht werden können. Über den Erweiterungen 27.3 der Aufnahmen 11.3 tragen die Strom-Sammelschienen-Abschnitte 20.3 die Befestigungsaufnahmen 25.3 für die Befestigungsschrauben, die die Verbinderelemente 26, 28 mit den Strom-Sammelschienen-Abschnitten 20.3 verbinden. Im Bereich der Innenseiten 16.3 und der Außenseiten 17.3 trägt die Trägerplatte 10.3 Befestigungsaufnahmen 30.3 zur Befestigung des zweiten Halters an der Befestigungsfläche.

In Fig. 5 ist angedeutet, wie an einen ersten Halter nach Fig. 1 an die Schmalseite 18 ein zweiter Halter nach Fig. 3 angereiht werden kann. Der zweite Halter ist mit der Stirnseite 19.1 der Schmalseite 18 des ersten Halters zugekehrt. Die Verbinderelemente 26, 28 werden in die Erweiterungen 27 und 27.1 eingeführt und mittels Befestigungsschrauben mit den Strom-Sammelschienen-Abschnitten 20 und 20.1 verbunden. An die Stirnseite 18.2 kann sich ein weiterer erster Halter anschließen. Das Sammelschienensystem wird damit von der horizontalen Richtung senkrecht nach unten weitergeführt. Die Klemmschenkel 23, 23.1 und 23.2 sind zu der Längsseite 17 und den Außenseiten 17.1 und 17.2 gerichtet, so daß sowohl in den horizontalen, als auch in den vertikalen Abschnitten des Sammelschienensystems elektrische Geräte angeschlossen werden können.

Wird die Stirnseite 18.2 des zweiten Halters an die Schmalseite 18 des ersten Halters angeschlossen, dann wird über den zweiten Halter das Sammelschienensystem senkrecht nach oben weitergeführt.

Wie im rechten Teil der Fig. 5 gezeigt ist, werden die Stromzuführungsleitungen über die Anschlußplatte 10.4 auf das Sammelschienensystem geschaltet. Auf der Anschlußplatte 10.4 sind die rechtwinkligen Verbindungsschienen 20.4 befestigt und zwar in Aufnahmen 11.4, die an der Anschlußseite 19.4 in Erweiterungen 27.4 enden. Die Erweiterungen 27.4 nehmen Verbinderelemente 26, 28 auf, an denen die Stromzuführungsleitungen angeschlossen werden können. An der senkrecht dazu stehenden Anschlußseite 18.4 enden die Aufnahmen 11.4 ebenfalls in Erweiterungen 27.4 zur Aufnahme von Verbinderelementen 26, 28, über die ein erster oder zweiter Halter angereiht werden kann.

Die Stromzuführungsleitungen können aber auch unter Wegfall der Anschlußplatte 10.4 direkt mit den in die Aufnahmen 27 eines ersten Halters oder in die Aufnahmen 27.1, 27.2 oder 27.3 eines zweiten Halters eingesetzten Verbinderelemente 26, 28 verbunden werden. Im Bereich der Anschlußseite 18.4 und den Außenseiten 17.4 der Anschlußplatte 10.4 sind Befestigungsaufnahmen 30.4 eingebracht, die Befestigungsschrauben zur Anbringung der Anschlußplatte 10.4 an der Befestigungsfläche aufnehmen. Auch die Verbindungsschienen 20.4 sind zur Befestigungsfläche hin vollständig isoliert und abgedeckt.

Mit den ersten und zweiten Haltern ist ein Sammelschienensystem in zwei senkrecht zueinander stehenden Richtungen erweiterbar. Die ersten und zweiten Halter lassen sich als Einheiten vorfertigen und werden mittels der Verbinderelemente 26, 28 in der gewünschten Weise zu dem Sammelschienensystem aneinandergereiht, wobei die Verbinderelemente 26, 28 die elektrische Durchschaltung der in gleichem Abstand zueinander angeordneten Strom-Sammelschienen-Abschnitte mit einheitlichem Querschnitt übernehmen.

## Patentansprüche

1. Bausatz für ein Sammelschienensystem aus Haltern und Strom-Sammelschienen-Abschnitten, die in im Abstand und parallel zueinander verlaufende Aufnahmen der Halter festlegbar oder festgelegt sind, bestehend aus
a) ersten Haltern, die als rechteckförmige Trägerplatten (10) ausgebildet sind, deren Längsabmessungen in Längsrichtung der Strom-Sammelschienen-Abschnitte (20) ausgerichtet sind,
b) zweiten Haltern, die als zusammengesetzte oder einstückige rechtwinklige Trägerplatten (10.1 und 10.2 oder 10.3) ausgebildet sind, bei denen zusammengesetzte oder einstückige rechtwinklige Strom-Sammelschienen-Abschnitte (20.1 und 20.2 oder 20.3) in den Aufnahmen (11.1 und 11.2 oder 11.3) dieser Trägerplatten (10.1 und 10.2 oder 10.3) festgelegt sind, und
c) Verbinderelementen (27,28), die im Bereich der Stoßstellen der Trägerplatten (10, 10.1, 10.2, 10.3) aufeinanderstoßender erster und/oder zweiter Halter die Strom-Sammelschienen-Abschnitte (20, 20.1, 20.2, 20.3) elektrisch leitend miteinander verbinden,
dadurch gekennzeichnet,
daß die Strom-Sammelschienen-Abschnitte (20, 20.1, 20.2, 20.3) mit den Schmalseiten ihrer zugeordneten Trägerplatte (10, 10.1, 10.2, 10.3) bündig abschließen,
daß die Strom-Sammelschienen-Abschnitte (20, 20.1, 20.2, 20.3) im Querschnitt Z-förmige ausgebildet sind,
daß ein Querschenkel jeweils als Befestigungsschenkel (21, 21.1, 21.2, 21.3) in die Aufnahme (11, 11.1, 11.2, 11.3) eingeführt und mit der Trägerplatte (10, 10.1, 10.2, 10.3) verbunden, vorzugsweise verschraubt ist,
daß jeweils ein Abstandsschenkel (22) den jeweils anderen Querschenkel als Klemmschenkel (23, 23.1, 23.2, 23.3) im Abstand und parallel zu der Oberseite der Trägerplatte (10, 10.1, 10.2, 10.3) hält,
daß die als Klemmschenkel (23) dienenden Querschenkel der Z-förmigen Strom-Sammelschienen-Abschnitte (20, 20.1, 20.2, 20.3) auf den Trägerplatten (10, 10.1, 10.2, 10.3) jeweils zur gleichen Längsseite (17) oder den Außenseiten (17.1, 17.2, 17.3) der Trägerplatten (10, 10.1, 10.2, 10.3) ausgerichtet sind,
daß in den Nutgrund der nutförmigen Aufnahmen (11, 11.1, 11.2, 11.3) der Trägerplatten (10, 10.1, 10.2, 10.3) in den Endabschnitten der Schmalseiten (18,19) oder der Stirnseiten (18.2 und 19.2 bzw. 18.3 und 19.3) Erweiterungen (27, 27.1, 27.2, 27.3) zur Aufnahme der Hälfte von plattenförmigen Verbinderelementen (26,28) eingebracht sind, und
daß die Strom-Sammelschienen-Abschnitte (10, 10.1, 10.2, 10.3) im Bereich dieser Erweiterungen (27, 27.1, 27.2, 27.3) mit Befestigungsaufnahmen (25, 25.1, 25.2, 25.3) für Befestigungsschrauben (29) versehen sind, die in Gewindeaufnahmen (31) der in die Erweiterungen (27, 27.1, 27.2, 27.3) eingeschobenen Verbinderelemente (26,28) einschraubbar sind.

2. Bausatz nach Anspruch 1,
dadurch gekennzeichnet,
daß die rechtwinkligen Trägerplatten der zweiten Halter aus jeweils zwei Teil-Trägerplatten (10.1 und 10.2) zusammengesetzt sind, die im Bereich ihrer Stoßstellen im ergänzenden Winkel von jeweils 45° zu den auf ihrer Oberseite festgelegten Strom-Sammelschienen-Abschnitte (20.1 und 20.2) stehen (Fig. 3).

3. Bausatz nach Anspruch 1 oder 2,
dadurch gekennzeichnet,
daß in die zusammengesetzten rechtwinkligen Aufnahmen (11.1, 11.2) der zusammengesetzten Trägerplatten (10.1, 10.2) der zweiten Halter rechtwinklige einstückige Strom-Sammelschienen-Abschnitte (20.1, 20.2) eingesetzt sind.

4. Bausatz nach Anspruch 1 oder 2,
dadurch gekennzeichnet,
daß in die zusammengesetzten rechtwinkligen Aufnahmen (11.1, 11.2) der zusammengesetzten rechtwinkligen Trägerplatten (10.1, 10.2) der zweiten Halter einzelne Strom-Sammelschienen-Abschnitte (20.1, 20.2) eingesetzt sind, die im Bereich der aufeinanderstoßenden abgeschrägten Seiten der Teil-Trägerplatten (10.1, 10.2) mittels rechtwinkliger Verbinderelemente (35) elektrisch leitend miteinander verbunden sind.

5. Bausatz nach Anspruch 1,
dadurch gekennzeichnet,
daß die rechtwinkligen Trägerplatten (10.3) der zweiten Halter einstückig ausgebildet sind, und
daß in die rechtwinkligen Aufnahmen (11.3) einzelne Strom-Sammelschienen-Abschnitte (10.1, 10.2) eingesetzt sind, die im Bereich der aufeinanderstoßenden, abgeschrägten Aufnahmen (11.3) mittels rechtwinkliger Verbinderelemente (35) elektrisch leitend miteinander verbunden sind.

6. Bausatz nach einem der Ansprüche 1 bis 5,
dadurch gekennzeichnet,
daß als weiteres Bauteil eine Anschlußplatte (10.4) vorgesehen ist, die mit rechtwinkligen Verbindungsschienen (20.4) versehen ist,
daß die rechtwinkligen Verbindungsschienen (20.4) bündig mit zwei im rechten Winkel zueinander stehenden Anschlußseiten (18.4, 19.4) der Anschlußplatte (10.4) abschließen, und
daß die Verbindungsschienen (20.4) zumindest auf einer Anschlußseite (18.4) der Anschlußplatte (10.4) mittels Verbinderelementen (26,28) mit den Strom-Sammelschienen-Abschnitten (10, 10.1, 10.2, 10.3) eines ersten oder zweiten Halters verbindbar sind.

7. Bausatz nach Anspruch 1,
dadurch gekennzeichnet,
daß die Erweiterungen (27, 27.1, 27.2, 27.3) im Nutgrund der ntuförmigen Aufnahmen (11, 11.1, 11.2, 11.3) eingebracht und in der Breite, der Tiefe und der Höhe auf die Breite, die halbe Länge und die Dicke der plattenförmigen Verbinderelemente (26,28) abgestimmt sind.

8. Bausatz nach einem der Ansprüche 1 bis 7,
dadurch gekennzeichnet,
daß die Breite der Verbinderelemente (26,28) der Breite der Erweiterungen (27, 27.1, 27.2, 27.3) und der Breite der Befestigungsschenkel (21, 21.1, 21.2, 21.3) der Strom-Sammelschienen-Abschnitte (20, 20.1, 20.2, 20.3) entspricht.

9. Bausatz nach einem der Ansprüche 1 bis 8,
dadurch gekennzeichnet,
daß die Verbinderelemente aus einer Isolierplatte (26) und einer Kontaktplatte (28) zusammengesetzt sind, wobei die Befestigungsschrauben (29) jeweils durch Bohrungen der Kontaktplatte (28) hindurch in die Gewindeaufnahme (31) der Isolierplatte (26) eingeschraubt sind.

10. Bausatz nach einem der Ansprüche 1 bis 9,
dadurch gekennzeichnet,
daß zumindest zwischen den benachbarten Strom-Sammelschienen-Abschnitten (20, 20.1, 20.2, 20.3) Reihen von Durchbrüchen (12, 12.1, 12.2, 12.3) in die Trägerplatte (10, 10.1, 10.2, 10.3) eingebracht sind, die in Längsrichtung derselben in gleichmäßigen Abständen angeordnet und quer dazu aufeinander ausgerichtet sind, und
daß in die Unterseite der Trägerplatte (10, 10.1, 10.2, 10.3) quer zu den Strom-Sammelschienen-Abschnitten (20, 20.1, 20.2, 20.3) verlaufende Aussparungen (13,14,15; 13.1, 14.1, 15.1; 13.2, 14.2, 15.2; 13.3, 14.3, 15.3) eingebracht sind, die als Kabelkanäle die Durchbrüche (12, 12.1, 12.2, 12.3) miteinander und mit den Längsseiten oder den Außen- und Innenseiten (16.1, 17.1 und 16.2, 17.2 bzw. 16.3 und 17.3) der Trägerplatten (10, 10.1, 10.2, 10.3) verbinden.

11. Bausatz nach Anspruch 6,
dadurch gekennzeichnet,
daß die Verbindungsschienen (20.4) aus Flachmaterial bestehen und in entsprechende nutförmige Aufnahmen (11.4) der Anschlußplatte (10.4) eingesetzt sind und
daß im Bereich der Enden der winkelförmigen Verbindungsschienen (20.4) an den Anschlußseiten (18.4, 19.4) der Anschlußplatte (20.4) Erweiterungen (27.4) der Aufnahmen (11.4) zum Einbringen von Verbinderelementen (26,28) vorgesehen sind.

## Claims

1. Structural assembly for a bus-bar system formed from holders and bus-bar portions, which are securable or are secured in receiving members of the holders, which receiving members extend at a spacing from, and parallel to, one another, comprising
a) first holders, which are rectangular carrier plates (10), the longitudinal dimensions of which are orientated in the longitudinal direction of the bus-bar portions (20),
b) second holders, which are combined or one-piece rectangular carrier plates (10.1 and 10.2 or 10.3), wherein combined or one-piece rectangular bus-bar portions (20.1 and 20.2 or 20.3) are secured in the receiving members (11.1 and 11.2 or 11.3) of these carrier plates (10.1 and 10.2 or 10.3), and
c) connectors (26, 28), which interconnect the bus-bar portions (20, 20.1, 20.2, 20.3) in an electrically conductive manner in the region of the junctions between the carrier plates (10, 10.1, 10.2, 10.3) of abutting first and/or second holders,
characterised in that the bus-bar portions (20, 20.1, 20.2, 20.3) terminate flush with the narrow sides of their associated carrier plate (10, 10.1, 10.2, 10.3), in that the bus-bar portions (20, 20.1, 20.2, 20.3) have a Z-shaped cross-section, in that a respective transverse shank is introduced into each receiving member (11, 11.1, 11.2, 11.3) as a securing shank (21, 21.1, 21.2, 21.3) and is connected, preferably screw-connected, to the carrier plate (10, 10.1, 10.2, 10.3), in that a respective spacer shank (22) retains the other respective transverse shank as a clamping shank (23, 23.1, 23.2, 23.3) at a spacing from, and parallel to, the top side of the carrier plate (10, 10.1, 10.2, 10.3), in that the transverse shanks of the Z-shaped bus-bar portions (20, 20.1, 20.2, 20.3) on the carrier plates (10, 10.1, 10.2, 10.3) serve as clamping shanks (23) and are each orientated relative to the same longitudinal side (17) or the external sides (17.1, 17.2, 17.3) of the carrier plates (10, 10.1, 10.2, 10.3), in that extensions (27, 27.1, 27.2, 27.3) for receiving half of the plate-like connectors (26, 28) are inserted into the groove base of the groove-like receiving members (11, 11.1, 11.2, 11.3) of the carrier plates (10, 10.1, 10.2, 10.3) in the end portions of the narrow sides (18, 19) or the end faces (18.2 and 19.2 or respectively 18.3 and 19.3), and in that the bus-bar portions (10, 10.1, 10.2, 10.3) are provided with securing receivers (25, 25.1, 25.2, 25.3) in the region of these extensions (27, 27.1, 27.2, 27.3) for securing screws (29), which are screw-connectable into threaded receivers (31) of the connectors (26, 28) inserted into the extensions (27, 27.1, 27.2, 27.3).

2. Structural assembly according to claim 1, characterised in that the rectangular carrier plates of the second holders each comprise two partial carrier plates (10.1 and 10.2) which, in the region of their junctions, lie in each case at the complementary angle of 45° in each case relative to the bus-bar portions (20.1 and 20.2) secured on their top side (Fig. 3).

3. Structural assembly according to claim 1 or 2, characterised in that rectangular one-piece bus-bar portions (20.1, 20.2) are inserted into the combined rectangular receiving members (11.1, 11.2) of the combined carrier plates (10.1, 10.2) of the second holders.

4. Structural assembly according to claim 1 or 2, characterised in that individual bus-bar portions (20.1, 20.2), which are interconnected in an electrically conductive manner in the region of the abutting inclined sides of the partial carrier plates (10.1, 10.2) by means of rectangular connectors (35), are inserted into the combined rectangular receiving members (11.1, 11.2) of the combined rectangular carrier plates (10.1, 10.2) of the second holders.

5. Structural assembly according to claim 1, characterised in that the rectangular carrier plates (10.3) of the second holders have a one-piece construction, and in that individual bus-bar portions (10.1, 10.2), which are interconnected in an electrically conductive manner in the region of the abutting inclined receiving members (11.3) by means of rectangular connectors (35), are inserted into the rectangular receiving members (11.3).

6. Structural assembly according to one of claims 1 to 5, characterised in that a connection plate (10.4), which is provided with rectangular connection bars (20.4), is provided as an additional component part, in that the rectangular connection bars (20.4) terminate flush with two connection sides (18.4, 19.4) of the connection plate (10.4) which lie at right angles to each other, and in that the connection bars (20.4) on at least one connection side (18.4) of the connection plate (10.4) are connectable to the bus-bar portions (10, 10.1, 10.2, 10.3) of a first or second holder by means of connectors (26, 28).

7. Structural assembly according to claim 1, characterised in that the extensions (27, 27.1, 27.2, 27.3) are inserted into the groove base of the groove-like receiving members (11, 11.1, 11.2, 11.3) and are adapted, in respect of their width, depth and height, to the width, half the length and the thickness of the plate-like connectors (26, 28).

8. Structural assembly according to one of claims 1 to 7, characterised in that the width of the connectors (26, 28) corresponds to the width of the extensions (27, 27.1, 27.2, 27.3) and the width of the securing shanks (21, 21.1, 21.2, 21.3) of the bus-bar portions (20, 20.1, 20.2, 20.3).

9. Structural assembly according to one of claims 1 to 8, characterised in that the connectors are formed from an insulating plate (26) and a contact plate (28), the securing screws (29) being each screw-connected into the threaded receiver (31) of the insulating plate (26) through bores of the contact plate (28).

10. Structural assembly according to one of claims 1 to 9, characterised in that rows of openings (12, 12.1, 12.2, 12.3) are introduced into the carrier plate (10, 10.1, 10.2, 10.3) between at least the adjacent bus-bar portions (20, 20.1, 20.2, 20.3), which openings are disposed in the longitudinal direction of said carrier plate with uniform spacings therebetween and are aligned with one another perpendicularly thereto, and in that recesses (13, 14, 15; 13.1, 14.1, 15.1; 13.2, 14.2, 15.2; 13.3, 14.3, 15.3), which extend perpendicularly relative to the bus-bar portions (20, 20.1, 20.2, 20.3), are introduced into the underside of the carrier plate (10, 10.1, 10.2, 10.3) and, as cable ducts, connect the openings (12, 12.1, 12.2, 12.3) to one another and to the longitudinal sides or the external and internal sides (16.1, 17.1, and 16.2, 17.2 or respectively 16.3 and 17.3) of the carrier plates (10, 10.1, 10.2, 10.3).

11. Structural assembly according to claim 6, characterised in that the connection bars (20.4) are formed from flat material and are inserted into corresponding groove-like receiving members (11.4) of the connection plate (10.4), and in that extensions (27.4) of the receiving members (11.4) are provided in the region of the ends of the angular connection bars (20.4) on the connection sides (18.4, 19.4) of the connection plate (20.4) for the insertion of connectors (26, 28).

## Revendications

1. Assemblage pour un système de barre conductrice composé d'éléments de fixation et de tronçons de barre conductrice, qui peuvent être assujettis ou qui sont assujettis dans des logements disposés à distance et parallèlement les uns aux autres, comprenant
a) des premiers éléments de fixation, qui ont la forme de plaques de support rectangulaires (10), dont les dimensions en longueur sont orientées dans la direction longitudinale des tronçons de barre conductrice (20),
b) des seconds éléments de fixation, qui ont la forme de plaques de support composées ou en une pièce en forme de cornière , dans lesquelles des tronçons de barre conductrice composés ou en une pièce en forme de cornière (20.1 et 20.2 ou 20.3) sont assujettis dans les logements (11.1 et 11.2 ou 11.3) de ces plaques de support , et
c) des éléments connecteurs (27, 28), qui dans la région des endroits de butée des plaques de support (10, 10.1, 10.2, 10.3) des premiers et/ou seconds éléments de fixation connectent électriquement les tronçons de barre conductrice (20, 20.1, 20.2, 20.3),
caractérisé
par le fait que les tronçons de barre conductrice (20, 20.1, 20.2, 20.3) se terminent à fleur des petits côtés de la plaque de support associée (10, 10.1, 10.2, 10.3),
par le fait que les tronçons de barre conductrice (20, 20.1, 20.2, 20.3) sont en forme de Z en section transversale,
par le fait qu'une aile transversale est en tant qu'aile de fixation (21, 21.1, 21.2, 21.3) introduite dans le logement (11, 11.1, 11.2, 11.3) et est reliée à la plaque de support (10, 10.1, 10.2, 10.3), de préférence par vissage,
par le fait que chaque aile d'écartement (22) maintient en tant qu'aile de serrage (23, 23.1, 23.2, 23.3) l'autre aile transversale à distance et parallèlement à la face supérieure de la plaque de support (10., 10.1, 10.2, 10.3),
par le fait que les ailes transversales servant d'ailes de serrage (23) des tronçons de barre conductrice en forme de Z (20, 20.1, 20.2, 20.3) sur les plaques de support (10, 10.1, 10.2, 10.3) sont chacune orientées vers le même grand côté (17) ou vers les faces extérieures (17.1, 17.2, 17.3) des plaques de support (10, 10.1, 10.2, 10.3),
par le fait que dans le fond de rainure des logements en forme de rainure (11, 11.1, 11.2, 11.3) des plaques de support (10. 10.1, 10.2, 10.3) dans les tronçons terminaux des petits côtés (18, 19) ou des faces frontales (18.2 et 19.2 ou 18.3 et 19.3) sont pratiqués des évasements (27, 27.1, 27.2, 27.3) pour la réception de la moitié des éléments connecteurs en forme de plaque (26, 28), et
par le fait que dans la région de ces évasements (27, 27.1, 27.2, 27.3), les tronçons de barre conductrice (10, 10.1, 10.2, 10.3) présentent des logements de fixation (25, 25.1, 25.2, 25.3) pour des vis de fixation (29), qui peuvent être vissées dans des logements filetés (31) des éléments connecteurs (26, 28) glissés dans les évasements (27, 27.1, 27.2, 27.3).

2. Assemblage suivant la revendication 1,
caractérisé
par le fait que les plaques de support coudées à angle droit des deuxièmes éléments de fixation sont chacune composées de deux plaques de support partielles (10.1 et 10.2) qui dans la région de leurs points de butée forment un angle complémentaire de chaque fois 45° avec les tronçons de barre conductrice (20.1 et 20.2) assujettis sur leur face supérieure (Fig. 3).

3. Assemblage suivant la revendication 1 ou la revendication 2,
caractérisé
par le fait que dans les logements composés coudés à angle droit (11.1, 11.2) des plaques de support composées (10.1, 10.2) des deuxièmes éléments de fixation sont insérés des tronçons de barre conductrice en une pièce coudés à angle droit (20.1, 20.2).

4. Assemblage suivant la revendication 1 ou la revendication 2,
caractérisé
par le fait que dans les logements composés coudés à angle droit (11.1, 11.2) des plaques de support composées coudées à angle droit (10.1, 10.2) des deuxièmes éléments de fixation sont insérés des tronçons individuels de barre conductrice (20.1, 20.2), lesquels dans la région des côtés biseautées venant buter l'un sur l'autre des plaques de support partielles (10.1, 10.2) sont connectés électriquement au moyen d'éléments connecteurs coudés à angle droit (35).

5. Assemblage suivant la revendication 1,
caractérisé
par le fait que les plaques de support coudées à angle droit (10.3) des deuxièmes éléments de fixation sont fabriqués en une pièce, et
par le fait que dans les logements coudés à angle droit (11.3) sont insérés des tronçons individuels de barre conductrice (10.1. 10.2), lesquels dans la région des logements biseautés (11.3) butant l'un sur l'autre sont connectés électriquement au moyen d'éléments connecteurs coudés à angle droit (35).

6. Assemblage suivant l'une quelconque des revendications de 1 à 5,
caractérisé
par le fait qu'en tant qu'élément de construction supplémentaire il est prévu une plaque de raccordement (10.4), qui est dotée de rails de connexion coudés à angle droit (20.4),
par le fait que les rails de connexion coudés à angle droit (20.4) se terminent à fleur de deux faces de raccordement (18.4, 19.4) formant entre elles un angle droit de la plaque de raccordement (10.4), et
par le fait que du moins sur une face de face de raccordement (18.4) de la plaque de raccordement (10.4), les rails de connexion (20.4) peuvent au moyen d'éléments connecteurs (26, 28) être connectés aux tronçons de barre conductrice (10, 10.1, 10.2, 10.3) d'un premier ou d'un deuxième élément de fixation.

7. Assemblage suivant la revendication 1,
caractérisé
par le fait que les évasements (27, 27.1, 27.2, 27.3) sont pratiqués dans le fond de la rainure des logements en forme de rainure (11, 11.1, 11.2, 11.3) et sont en largeur, en profondeur et en hauteur harmonisés avec la largeur, la demi-longueur et l'épaisseur des éléments connecteurs en forme de plaque (26, 28).

8. Assemblage suivant l'une quelconque des revendications de 1 à 7,
caractérisé
par le fait que la largeur des éléments connecteurs (26, 28) correspond à la largeur des évasements (27, 27.1, 27.2, 27.3) et à la largeur des ailes de fixation (21, 21.1, 21.2, 21.3) des tronçons de barre conductrice (10, 10.1, 10.2, 10.3).

9. Assemblage suivant l'une quelconque des revendications de 1 à 8,
caractérisé
par le fait que les éléments connecteurs sont composés d'une plaque isolante (26) et d'une plaque de contact (28), les vis de fixation (29) étant chacune vissées à travers des forures de la plaque de contact (28) dans le logement fileté (31) de la plaque isolante (26).

10. Assemblage suivant l'une quelconque des revendications de 1 à 9,
caractérisé
par le fait qu'au moins entre les tronçons de barre conductrice (20, 20.1, 20.2, 20.3) sont pratiqués des séries de passages (12, 12.1, 12.2, 12.3) dans la plaque de support (10, 10.1, 10.2, 10.3), passages qui en leur direction longitudinale sont disposés à intervalles réguliers et sont orientés transversalement à cette direction, et
par le fait que dans la face inférieure de la plaque de support (10, 10.1, 10.2, 10.3) sont pratiqués des évidements (13, 14, 15; 13.1, 14.1, 15.1; 13.2, 14.2, 15.2; 13.3, 14.3, 15.3) orientés transversalement aux tronçons de barre conductrice (20, 20.1, 20.2, 20.3), évidements qui en tant que canalisations pour câbles relient les passages (12, 12.1, 12.2, 12.3) entre eux et aux faces longitudinales ou les faces extérieures et intérieures (16.1, 17.1 et 16.2, 17.2 ou 16.3 et 17.3) des plaques de support (1, 10.1, 10.2, 10.3).

11. Assemblage suivant la revendication 6,
caractérisé
par le fait que les rails de connexion (20.4) sont fabriqués en un matériau plat et sont montés dans des logements en forme de rainure correspondants (11.4) de la plaque de raccordement (10.4), et
par le fait que dans la région des extrémités des rails de connexion coudés (20.4), des évasements (27.4) des logements (11.4) sont prévus sur les faces de raccordement (18.4, 19.4) de la plaque de raccordement (20.4), pour la mise en place d'éléments connecteurs (26, 28).
